# EUROPEAN PATENT SPECIFICATION

(11) **EP 1 233 555 B1**
(45) Date of publication and mention of the grant of the patent: **13.07.2005**
(21) Application number: 01103895.7
(22) Date of filing: 16.02.2001
(51) Int. Cl.: H04H 1/00, H04B 1/28, H04B 1/16, H04B 1/26

(54) **Method for processing a received broadcast signal and a system therefore**
Verfahren und Vorrichtung zur Verarbeitung eines empfangenen Rundfunksignals
Procédé et appareil de traitement d'un signal de radiodiffusion

(43) Date of publication of application: 21.08.2002
(73) Proprietor: Sony International (Europe) GmbH, 10785 Berlin (DE)
(72) Inventor: Wildhagen, Jens, Sony International (Europe) GmbH, 70327 Stuttgart (DE); Schill, Dietmar, Sony International (Europe) GmbH, 70327 Stuttgart (DE); Merkle, Carsten, Sony International (Europe) GmbH, 70327 Stuttgart (DE); Zumkeller, Markus, Sony International Europe GmbH, 70327 Stuttgart (DE); Nöthlings, Rolf, Sony International (Europe) GmbH, 70327 Stuttgart (DE)
(74) Representative: Müller - Hoffmann & Partner

(56) References cited:
- WO-A-00/55977
- WO-A-88/10548
- US-A- 5 430 890
- US-A- 5 493 721

## Description

The invention relates to a method for processing a received broadcast signal and a system therefore.

Generally, todays digital receivers are divided into an analogue front-end part and a digital baseband part. The digital baseband part which may be realized as a digital baseband LSI (Large Scale Integrated) device (in the following only referred to as LSI) processes an output signal of the analogue front-end part which in most cases is an analogue IF (intermediate frequency) signal. In such cases, the task of the analogue front-end part is to convert a received broadcast signal into the analogue IF signal of a given predetermined frequency.

As the use of mobile digital receivers has steadily increased during the recent years, there is a special need to improve digital receivers with respect to low power consumption.

For example, document US 4,910,752, and document US 4,811,362, the content of both documents being very similar to each other, disclose a low power digital receiver which is capable of selecting a sampling frequency of an Analogue / Digital Converter converting an analogue IF signal into a digital IF signal out of a number of given possible sampling frequencies. The sampling frequency is selected by choosing one of different sampling signals having different frequencies, respectively. The digital receiver is capable of analyzing the present "quality" of the digital IF signal, and therefore deciding during run time if a higher sampling frequency is needed to obtain a desired level of quality of the digital IF signal. On the other hand, if the present quality of the digital IF signal is rather good, the digital receiver may decide to choose a lower sampling frequency. Thus, the power consumption of the digital receiver can be reduced.

In the sampling process described above, before quantization of the analogue IF signal, a sample-and-hold circuit multiplies a selected harmonic of the chosen sampling signal by the analogue IF signal such that its analogue output, a second analogue IF signal, shows a preferred frequency of approximately 1/4th of a frequency of the chosen sampling signal. In other words, the analogue IF signal is "adapted" to the frequency of the selected sampling signal. Since the second analogue IF signal always shows 1/4th of the frequency of the chosen sampling signal, the digital IF signal shows always the same digital IF. Thus, it is possible to use different sampling rates for sampling the analogue IF signal, but obtaining the same digital IF.

However, the sampling process described above is only possible for analogue IF signals having a rather high frequency. In other words, it may not be possible to choose a high sampling rate if a frequency of an analogue IF signal is already low: This comes from the fact that the frequency of the analogue IF signal IFₐ is related to a sampling frequency FS by IFₐ = (n ± 1 /4) ·FS, with n being an integer. From this equation follows that a minimum of the frequency IFₐ of the analogue IF signal is determined by the maximum of the sampling frequency FS. This limitation makes it impossible to sample the analogue IF signal of a low IF architecture front-end with a high sampling frequency to increase the dynamic range of the Analogue/Digital Converter. In addition, the equation above must be fulfilled when changing the sampling frequency FS of the Analogue/Digital Converter. This limits both possible frequencies IFₐ of the analogue IF signal and possible sampling frequencies FS.

In addition, the digital receivers described above are designed to only process analogue IF signals having a common, fixed frequency. However, different analogue front-ends which are needed to receive broadcast signals of different broadcast systems, e. g. AM (amplitude modulation) and FM (frequency modulation) usually convert corresponding received broadcast signals into analogue IF signals with different frequencies. Since it may be required to use different analogue front-ends within one single digital receiver to cover a broad variety of broadcast systems, there is a need to improve digital receivers so that they can deal with various types of analogue front-ends, in particular with respect to the resulting different IF signals.

It is therefore an object of the present invention to improve such an above described digital receiver so that a high flexibility with respect to various types of broadcast systems is ensured.

This object is solved by a system for processing an analogue intermediate frequency signal according to independent claim 1 and a method for processing a received broadcast signal according to independent claim 16. Respective preferred embodiments thereof are defined in the following dependent subclaims, respectively.

Accordingly, a system according to the present invention for processing an analogue intermediate frequency signal with variable intermediate frequency comprises:
- sampling means for sampling the analogue intermediate frequency signal on the basis of a variable sampling rate to obtain a digital intermediate frequency signal,
- mixing means being connected to the sampling means for frequency shifting of the digital intermediate frequency signal on the basis of a variable shifting rate to obtain a digital baseband signal, wherein the shifting rate is adjustable so that the digital intermediate frequency signal is shifted into a predetermined frequency range.

Further, according to the present invention, a method for processing a received broadcast signal comprises the steps of:
- sampling the analogue intermediate frequency signal on the basis of a variable sampling rate to obtain a digital intermediate frequency signal,
- frequency shifting of the digital intermediate frequency signal on the basis of a variable shifting rate to obtain a digital baseband signal, wherein the shifting rate is adjusted in dependence of a frequency of the digital baseband signal so that the digital intermediate frequency signal is shifted into a predetermined frequency range.

According to the present invention, the sampling rate is variable and dependent on changing requirements of functionality (which may be represented by applications or ASIC-hardware, for example, and which is referred to in the following only as applications) used for processing the digital baseband signal working in the system. "Variable" means in this context that it is possible to switch between a plurality of discrete sampling frequencies (at least two different sampling frequencies). Therefore, high performance applications can "demand" a high sampling rate to increase their performance, whereas low-power applications which are especially designed for mobile receivers can use a low sampling rate in order to save energy. It is possible to change the sampling rate between low to high during the run-time of the digital receiver, which allows to immediately adapt the sampling rate to changing requirements of the applications, for example when changing from a FM-broadcast signal reception to an AM-broadcast signal reception or when there is a need to increase the neighbour channel suppression. As will be described later in detail, a high sampling rate may for example be used for neighbour channel suppression in case of a weak received broadcast signal.

The present invention makes it possible to generate a digital baseband signal which shows a frequency always being located within a predetermined frequency range, regardless of the frequency of the analogue IF signal being sampled and of the sampling rate being used. This is achieved by using a digital mixing means (in the following only referred to as mixing means) which is located after the sampling means, as will be described in detail now: Generally, a sampling means is capable of sampling frequency signals having arbitrary frequencies, as far as the Nyquist theorem is fulfilled and the bandwidth of the sampling means is wide enough. Thus, according to the present invention, an analogue IF signal of any frequency can be sampled to obtain a digital IF signal. Further, a digital mixing means is generally capable of shifting the frequency of a digital IF signal having an arbitrary frequency by an arbitary shift-mg rate. Thus, according to the present invention, the use of the mixing means after the sampling means allows to transform analogue IF signals with arbitrary frequencies and arbitrary discrete sampling rates into a digital baseband signal with a frequency always being located within a predetermined frequency range. In other words, the mixing means functions like an adapter to "map" digital intermediate frequency signals generated by the sampling means having different frequencies and being sampeled with different sampling rates to digital baseband signals with a common fixed frequency or frequency range. Thus, the present invention makes it possible to sample analogue IF signals having variable frequencies, the frequencies of all resulting digital signals lying in the same frequency range, and at the same time providing either high performance (high sampling rate) or energy saving (low sampling rate).

In contrast, in the prior art, as already described, a high sampling rate is not possible for low IF front-ends. Moreover, only analogue IF frequency signals having one fixed frequency can be used. Thus, the digital receivers described in the prior art can only be used in a limited amount of broadcast systems.

An advantage of shifting the digital IF signal so that the frequency of the digital baseband signal always lies in a predetermined frequency range is that the way of processing the digital baseband signal is "independent" of the frequency of the analogue IF signal, which facilitates the processing of the digital baseband signal remarkably. Thus, in the present invention, it is possible to use different analogue front-ends converting a received broadcast signal into analogue IF signals with different frequencies, without changing the way of processing the digital baseband signal.

The flexibility of the present invention in terms of processing analogue IF signals of arbitrary frequencies and ensuring power down modes for all those analogue IF signals makes it possible to use this method in all kinds of receivers and broadcast systems. Low IF front-ends generating an analogue IF signal with a low frequency can be used without limitations.

To further process the digital baseband signal it may be digitally filtered and/or digitally downsampled and/or subjected to a digital demodulation process. For example, a variable filter mode may be dynamically adjusted during the step of digitally filtering the digital baseband signal according to the currently processed broadcast system and/or to the bandwidth of the analogue IF signal. The digital baseband signal may be subjected to a demodulation process, preferably after having been filtered and/or downsampled.

In a preferred embodiment of the present invention, the mixing means is additionally used to retune (frequency synchronization) the frequency of the digital baseband signal in dependence of a frequency of the digital baseband signal, which may be analyzed during the step of processing the digital baseband signal. Such an retuning process is generally necessary for processing received digital modulated broadcast signals like DAB (Digital Audio Broadcasting), IBOC (In Band On Channel), DRM (Digital Radio Mondiale) or ISDB-Tn broadcast signals. Thus, the invention is capable of performing operations like frequency synchronization and neighbour channel suppression for digital modulated signals without additional hardware effort.

To process the digital baseband signal, the system preferably comprises processing means which are capable of controlling the shifting rate performed by the mixing means in dependence of a frequency of the digital baseband signal and/or are capable of adjusting the sampling rate according to changing requirements for processing the digital baseband signal or according to the frequency of the digital baseband signal. The sampling rate may also be directly adjusted by the sampling means according to the frequency of the analogue intermediate frequency signal, which would enable to facilitate the processing means.

The processing means of the system may comprise at least one signal path being connected to the mixing means for routing the digital baseband signal in dependence of a corresponding sampling rate via one of the signal paths, respectively. Each signal path comprises at least one digital filter for filtering the digital baseband signal, and at least one digital downsampling means for downsampling the digital baseband signal. Filter modes of the digital filters may be fixed or adjustable according to the bandwidth of the analogue IF signal. A downsampling rate of the digital downsampling means may be fixed or be adjustable according to the selected sampling rate of the analogue IF signal or according to other criteria.

Further, the processing means may comprise a digital demodulating means for demodulating a desired information from the digital baseband signal, for example a DSP (Digital Signal Processor).

The mixing means preferably is a complex mixing means for generating a complex digital baseband signal. The mixing means may also be an AFC (Automatic Frequency Control) means, which is capable of adjusting the shifting rate itself without extern control.

The system may comprise at least one analogue front-end being connected to the sampling means which is capable of converting a received broadcast signal into an analogue intermediate frequency signal with variable intermediate frequency, respectively.

The mixing means, the digital downsampling means, the digital filter means, and the digital demodulating means are preferably realized as parts of one ASIC (Application Specific Integrated Circuit)

The system according to the present invention may be realized as an "adapter" including for example sampling means and mixing means without processing means, or as a whole digital baseband LSI with sampling means, mixing means and processing means. In particular in the latter case, it is possible to connect different front-end architectures to the digital baseband LSI since different frequencies of the analogue intermediate frequency signal can be processed by the digital LSI without limitations. This, in connection with the low power capability, makes it possible to use the digital baseband LSI in all kinds of receivers.

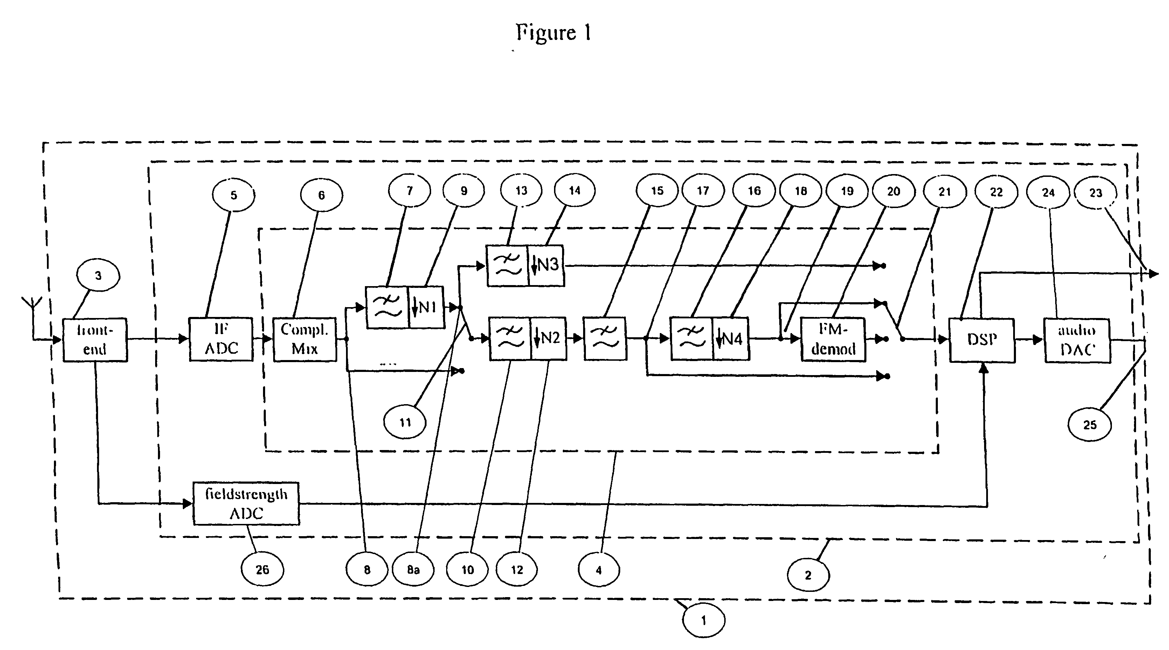

In the following, the present invention is illustrated by an exemplary embodiment thereof with reference to the accompanying drawings, wherein
- **Fig. 1**: shows a block diagram of a preferred embodiment of a system for processing an analog intermediate frequency signal with variable intermediate frequency according to the present invention;

A system 1 comprises a digital baseband LSI 2 and an analogue front-end 3 which is connected to the digital baseband LSI 2. The digital baseband LSI 2 comprises an ASIC 4, which is connected to the analogue front-end 3 via an IF-ADC (IF-Analogue/Digital Converter) 5. In the following, different parts of the ASIC 4 are described: A complex mixer 6 is connected to an output stage of the IF-ADC 5 (not part of the ASIC 4), an output stage of the complex mixer 6 being connected to a first digital filter 7 via a first junction 8. A first downsampling unit 9 is connected to an output stage of the first digital filter 7. An output stage of the first downsampling unit 9 is connected via a second junction 8a to a first switch 11, which may connect the first downsampling unit 9 with a second digital filter 10, or alternately connect the output stage of the complex mixer 6 via the first junction 8 directly to the second digital filter 10. An output stage of the second digital filter 10 is connected to a second downsampling unit 12. The second junction 8a also connects the output stage of the first downsampling unit 9 to a third digital filter 13, an output stage thereof being connected to a third downsampling unit 14. An output stage of the second digital filter 12 is connected to a fourth digital filter 15 having a variable bandwidth. An output stage of the fourth digital filter 15 is connected to a fifth digital filter 16 via a third junction 17. An output stage of the fifth digital filter 16 is connected to a fourth downsampling unit 18, an output stage thereof being connected via a fourth junction 19 to a FM-demodulating unit 20. An output stage of the FM-demodulating unit 20 is connected via a second switch 21 to a DSP (Digital Signal Processor) 22 (not part of the ASIC 4). The output stage of the fourth digital filter 15 may also be directly connected to the DSP 22 via the third junction 17 and the second switch 21. The output stage of the fourth downsampling unit 18 may also be directly connected to the DSP 22 via the fourth junction 19 and the second switch 21. A first output stage of the DSP 22 is connected to a first output terminal 23 (not part of the ASIC 4). A second output stage of the DSP 22 is connected to an audio DAC (audio Digital/Analog-Converter) 24 (not part of the ASIC 4). An output stage of the audio DAC 24 is connected to a second output terminal 25 (not part of the ASIC 4). The DSP 22 is also connected via a fieldstrength ADC 26 (not part of the ASIC 4) for indicating the fieldstrength of the received broadcast signal to the analogue front-end 3. An output stage of the third downsampling unit 14 is connected to the DSP 22 via the second switch 21.

A broadcast signal received by the analogue front-end 3 is converted into an analogue intermediate frequency signal and supplied to the IF-ADC 5, which samples the analogue intermediate frequency signal with two or more sampling rates, for example 30.720 MHz or 2 048 MHz. The selection of the samling rate depends on the requirements of the application running in the receiver, for example. Here, the low sampling rate of 2.048 MHz corresponds to a power down mode, that may be used of applications in battery-driven receivers. All other receivers preferably use a high sampling rate of 30.720 MHz, since no power savings are necessary here. The sampling rate can be changed during the operation of the digital baseband LSI 2 according to changing processing requirements of the ASIC 4 or the DSP 22. More generally, the IF-ADC 5 may be controlled by any part of the digital baseband LSI 2 which is concerned with the processing of a digital intermediate frequency signal/digital baseband signal. Preferably, the IF-ADC 5 as well as the complex mixer 6 are controlled by the DSP 22.

The digital basband signal may be routed in dependency of the switches 11, 21 via different signal paths to the DSP 22. The digital baseband signal is preferably routed to the output stage of the third digital downsampling unit 14 if a DAB broadcast signal is received by the analogue front-end 3. Depending on the design of the first digital filter 7 and first downsampling unit 9, the third digital filter 13 and the third downsampling unit 14 are not required. Generally, if the low sampling rate is used, the digital baseband signal is directly routed via the first switch 11 to the second filter 10 without passing the first filter 7 and the first downsampling unit 9. If the high sampling rate is used, the digital baseband signal is routed via the first filter 7 and the first downsampling unit 9 to the second filter 10.

If an IBOC- or ISDBT-Tn broadcast signal is received, the digital baseband signal may be directly routed from the output stage of the fourth digital filter 15 to the DSP 22 via the second switch 21. The same routing may be used when receiving AM or DRM broadcast signals. Alternatively, when receiving AM or DRM broadcast signals, the digital baseband signal may be directly routed from the output stage of the fourth downsampling unit 18 to the DSP 22 via the second switch 21. The same routing may be used when receiving IBOC- or ISDBT-Tn broadcast signals.

Generally, a variable amount of sampling rates may be used. The relationship between two sampling rates FS1, FS2 may be given by FS2=FS1/N, where N is an integer. If an additional sampling rate is implemented, it is advantageous to implement an additional corresponding signal path, which may comprise respective digital filters and/or downsampling units adapted to the additional sampling rate. However, if the downsampling rates are adjustable during run-time, it may be possible to integrate different downsampling units to a single downsampling unit, and dynamically adapt the downsampling rate of the single downsampling unit to the sampling rate presently used. For example, the second and the third downsampling unit 12, 14 may be condensed into a single downsampling unit.

The fifth digital filter 15 may also be left or be located between the fourth downsampling unit 18 and the FM-demodulating means 20.

The dynamic range of the IF-ADC 5 may be increased in portable receivers if requirements to suppress digital neighbour channel noise is high, which means that the sampling rate is increased. This allows a high digital neighbour channel suppression even for portable receivers, since the power consumption does only have to be increased during the processing of weak broadcast signals with strong neighbour channels.

Thus, the flexibility in terms of low power consumption and high performance on the one hand and the variable intermediate frequency on the other hand allows to use the digital baseband LSI 2 in all kinds of receivers, since different front-end architectures 3 with different associated intermediate frequencies required for different broadcast systems as well as energy saving aspects are covered.

The IF-ADC 5 preferably shows a resolution of at least 12 bit. Alternatively, the IF-ADC 5 shows 10 bit for mobile, portable and world receivers. In high-end home receivers an external 12 bit IF-ADC 5 may be used. Depending on SNR (Signal to Noise Ratio) and neighbour channel suppression requirements, also a 10 bit IF-ADC 5 may be used for high end and home receivers. In case of high requirements with respect to the digital neighbour channel suppression, an IF-ADC 5 with at least 12 bit should be used.

The complex mixer 6 may be used in a digital multiband receiver concept for the frequency synchronization of digital transmitted signals like DAB, IBOC, ISDB-Tn or DRM.

In the following description, a preferred embodiment describing how the digital baseband LSI 2 processes a received FM-broadcast signal is discussed.

In such an "FM-mode", the ASIC 4 preferably performs a digital neighbour channel suppression. A bandwidth of the fourth digital filter 15 is variable and can be switched between three or more different bandwidths. The performance of the digital neighbour channel suppression depends on the dynamic range of the IF-ADC 5. In battery driven receivers, the sampling rate may be increased from a power down mode, which preferably corresponds to a sampling rate of 2.048 MHz to a sampling rate of 30.720 MHz which makes it possible to increase the dynamic range of the IF-ADC 5 by about 12.0 dB.

A bandwidth of an analogue filter in the analogue front-end 3 (not shown) is wide in order to allow a demodulation with low harmonic distortions. In case of strong neighbour channels with low frequency offset, this bandwidth may be decreased by using the digital filter 15 within the ASIC 4.

In case of very high neighbour channels with low center frequency offset, the following method can be used to avoid performance limitations by a limited dynamic range of the IF-ADC 5: Generally, the analog intermediate frequency signal can be retuned by about 25, 50 or 100 kHz. For example, if the analogue intermediate frequency of a received broadcast singal is changed from 10.7 MHz to 10.6 MHz, a neighbour channel with strong energy is changed from 10.5 MHz to 10.4 MHz. This means that the neighbour channel is shifted more to a stop band of the analogue filter in the analogue front-end 3, so that the analogue filter reduces most of the energy of the neighbour channel. A remaining energy of the neighbour channel is therefore low, so that the dynamic range of the IF-ADC 5 is large enough to convert remaining parts of the neighbour channel and the wanted signal. Accordingly, a frequency of the digital baseband signal is also retuned to 10.6 MHz, so that the wanted signal is in the center of preferably all digital filters, in particular in the center of the digital filter 15 with narrow bandwitdh, which performs the digital neighbour channel suppression. The digital filter 15 suppresses remaining parts of the neighbour channel. With this method, a high suppression of strong neighbour channels with low center frequency offset is possible even if the dynamic range of the IF-ADC 5 is limited or the low sampling rate is used in portable receivers. It is also possible to use this method when processing AM, DRM, DAB, and other types of broadcast signals.

After having frequency demodulated the filtered digital baseband signal in the FM-demodulating unit 20 of the ASIC 4, a demodulated digital baseband signal and a FM-envelope signal are inputted into the DSP 22. The DSP 22 performs functions like stereo demultiplexing, RDS (Radio Data System)-decoding, noise detection, etc. Additionally, the DSP 22 performs stereo-mono blending based on psychoaccustical models.

In case the digital baseband LSI 2 processes a digital baseband signal obtained by an AM broadcast signal, the DSP 22 performs digital neighbour channel suppression using a variable filter bandwidth and a coherent and non-coherent amplitude demodulation. Other functionality preferably covered by the DSP 22 is sideband demodulation (coherent), distortion cancellation (carrier suppression).

In case the digital baseband LSI 2 processes a digital baseband signal obtained by a DRM broadcast signal, the DSP 22 performs digital neighbour channel suppression with a variable filter bandwidth and a standard compliant digital demodulation and decoding of services included in a DRM-multiplex contained in the digital baseband signal. The first step after adjacent channel suppression is a FFT (Fast Fourier Transform) which yields a signal transformed into the frequency domain with high resolution in order to be able to perform QAM (Quadratur Amplitude Modulation)-demapping. Since DRM-symbols may use a carrier spacing as low as 31.25 Hz, an analogue front-end 3 and a signal path leading to the DSP 22 with excellent phase-noise characteristics are required.

If the DSP 22 should need a considerable amount of power, complexity vs. performance trade-offs are possible, such as tailoring the number of iterations of a decoder using a hard-decision Viterbi algorithm instead of soft decisions etc. Most of these trade-offs can also be made during the processing of the digital baseband LSI 2 without interruption of the processing.

If the digital baseband LSI 2 is used to process a digital baseband signal obtained by an IBOC broadcast signal, no change of the ASIC 4 is required since the same signal path as in the AM mode and the DRM mode may be used. Frequency synchronization is performed using the complex mixer 6. A frequency resolution of the complex mixer 6 depends on an interface from the DSP 22 with respect to the ASIC 4. A 16 bit interface results in a frequency resolution of 468,75 Hz; a 24 bit interface results in a frequency resolution of 1.83 Hz, and a 32 bit interface results in a frequency resolution of 0.0072 Hz. Preferably, a 32 bit interface is used. If the digital baseband LSI 2 processes a digital baseband signal obtained by a received ISDB-Tn broadcast signal, the same signal path may be used when processing an IBOC-broadcast signal. Accordingly, frequency synchronization is performed by using the complex mixer 6.

If a DAB broadcast signal is processed, the analogue intermediate frequency signal is sampled by the IF-ADC 5 at a sampling rate of preferably 30.720 MHz. The complex mixer 6 performs the downconversion to a complex baseband signal and a frequency synchronization. The digital baseband signal is then downsampled by the first downsampling unit 9 by a factor of preferably 15. The third downsampling unit 14 is not used. The first downsampling unit 9 preferably comprises a sampling rate decimation filter which also performs digital DAB neighbour channel suppression.

In the following, a table of preferred frequencies of analogue IF signals in conjunction with different types of broadcast signals, sampling rates and broadcast receivers is given:

| receiver type | receiver size | power consumption | IF in MHz | | ADC sampling rate in MHz |
|---|---|---|---|---|---|
| | | | FM | AM/DRM | |
| high-end home | not important | not important | 10.7 | 0.455 | 30.720 |
| car radio | small | not important | 10.7 | 10.7 or 0.455 | 30.720 |
| world receiver | small | low | 10.7 | 0.455 | 30.720 or 2.048 |
| boom-box | small | low | 10.7 or 0.2 | 10.7 or 0.2 | 2.048 |
| handheld | very small | very low | 0.2 | 0.2 | 2.048 |

## Claims

1. System (1) for processing an analogue intermediate frequency signal with variable frequency, comprising:
- sampling means (5) for sampling the analogue intermediate frequency signal on the basis of a variable sampling rate to obtain a digital intermediate frequency signal.
- mixing means (6) being connected to the sampling means for frequency shifting of the digital intermediate frequency signal on the basis of a variable shifting rate being independent from the variable sampling rate to obtain a digital baseband signal, wherein the shifting rate is adjustable so that the digital intermediate frequency signal is shifted into a predetermined frequency range.

2. System (1) according to claim 1, **characterized by** processing means (4, 22, 24) for processing the digital baseband signal to obtain an output signal.

3. System (1) according to claim 2, **characterized in that** the processing means (4, 22, 24) is capable of adjusting the shifting rate in dependence of a frequency of the digital baseband signal.

4. System (1) according to claim 2 or 3, **characterized in that** the processing means (4, 22, 24) is capable of adjusting the sampling rate according to changing requirements for processing the digital baseband signal.

5. System (1) according to anyone of the preceding claims, **characterized in that** the sampling rate is adjustable in dependency of the bandwidth of the analogue intermediate frequency signal.

6. System (1) according to anyone of the claims 2 to 5, **characterized in that** the processing means (4, 22, 24) comprises at least one signal path being connected to the mixing means (6) for routing the digital baseband signal in dependence of the corresponding sampling rate via one of the signal paths, respectively.

7. System (1) according to claim 6, **characterized in that** each signal path comprises at least one digital filter (7, 10, 13, 15, 16) for filtering the digital baseband signal.

8. System (1) according to claim 7, **characterized in that** a filter mode of at least one digital filter (7, 10, 13, 15, 16) is adjustable according to the bandwidth of the analogue intermediate frequency signal.

9. System (1) according to anyone of the claims 6 to 8, **characterized in that** each signal path comprises at least one digital downsampling means (9, 12, 14, 18) for downsampling the digital baseband signal.

10. System (1) according to claim 9, **characterized in that** a downsampling rate of at least one digital downsampling means (9, 12, 14, 18) is adjustable according to the sampling rate of the analogue intermediate frequency signal.

11. System (1) according to anyone of the preceding claims, **characterized in that** the mixing means (6) generates a complex digital baseband signal.

12. System (1) according to anyone of the preceding claims, **characterized by** at least one analogue front-end (3) being connected to the sampling means (5) which is capable of converting a received broadcast signal into the analogue intermediate frequency signal with variable intermediate frequency, respectively.

13. System (1) according to anyone of the preceding claims, **characterized in that** the mixing means (6) is an Automatic Frequency Control means.

14. System (1) according to anyone of the claims 2 to 13, **characterized in that** the processing means (4, 22, 24) comprises a demodulating means (20, 22) for recovering information from the digital baseband signal.

15. System (1) according to claim 14, **characterized in that** the mixing means (6), the digital downsampling means (8, 11), the demodulating means (20), and the digital filter means (7, 9, 12) are realized as parts of one ASIC (4).

16. Method for processing a received broadcast signal after having converted the broadcast signal into an analogue intermediate frequency signal with variable intermediate frequency, comprising the steps of:
- sampling the analogue intermediate frequency signal on the basis of a variable sampling rate to obtain a digital intermediate frequency signal.
- frequency shifting of the digital intermediate frequency signal on the basis of a variable shifting rate being independent from the variable sampling rate to obtain a digital baseband signal, wherein the shifting rate is adjusted in dependence of a frequency of the digital baseband signal so that the digital intermediate frequency signal is shifted into a predetermined frequency range.

17. Method according to claim 16, **characterized by** processing the digital baseband signal to obtain an output signal.

18. Method according to claim 16 or 17, **characterized by** adjusting the shifting rate in dependence of a frequency of the digital baseband signal.

19. Method according to claim 17 or 18, **characterized by** adjusting the sampling rate according to changing requirements for processing the digital baseband signal.

20. Method according to anyone of the claims 16 to 19, **characterized by** adjusting the sampling rate in dependency of the bandwidth of the analogue intermediate frequency signal.

21. Method according to anyone of the claims 17 to 20, **characterized by** digitally filtering the digital baseband signal at least one time during the step of processing the digital baseband signal.

22. Method according to claim 21, **characterized by** adjusting a filter mode according to the bandwidth of the analogue intermediate frequency signal during the step of digitally filtering the digital baseband signal.

23. Method according to anyone of the claims 17 to 22, **characterized by** digitally downsampling the digital baseband signal at least one time during the step of processing the digital baseband signal.

24. Method according to claim 23, **characterized by** adjusting a downsampling rate according to the sampling rate of the analogue intermediate frequency signal.

25. Method according to anyone of the claims 16 to 24, **characterized by** generating a complex digital baseband signal during the step of shifting the frequency of the digital intermediate frequency signal.

## Patentansprüche

1. System (1) zum Verarbeiten eines analogen Zwischenfrequenzsignals mit variabler Frequenz, mit:
- einer Abtasteinrichtung (5) zum Abtasten des analogen Zwischenfrequenzsignals basierend auf einer variablen Abtastrate, um ein digitales Zwischenfrequenzsignal zu erhalten,
- einer Mischeinrichtung (6), die mit der Abtasteinrichtung verbunden ist, um eine Frequenzverschiebung des digitalen Zwischenfrequenzsignals basierend auf einer variablen Verschieberate, die unabhängig von der variablen Abtastrate ist, auszuführen, um ein digitales Basisbandsignal zu erhalten, wobei die Verschieberate so einstellbar ist, dass das digitale Zwischenfrequenzsignal in einen bestimmten Frequenzbereich verschoben wird.

2. System (1) gemäß Anspruch 1, **gekennzeichnet durch** eine Verarbeitungseinrichtung (4, 22, 24) zum Verarbeiten des digitalen Basisbandsignals, um ein Ausgangssignal zu erhalten.

3. System (1) gemäß Anspruch 2, **dadurch gekennzeichnet, dass** die Verarbeitungseinrichtung (4, 22, 24) dazu im Stande ist, die Verschieberate in Abhängigkeit einer Frequenz des digitalen Basisbandsignals einzustellen.

4. System (1) nach Anspruch 2 oder 3, **dadurch gekennzeichnet, dass** die Verarbeitungseinrichtung (4, 22, 24) dazu im Stande ist, die Abtastrate einzustellen gemäß sich ändernden Anforderungen zum Verarbeiten des digitalen Basisbandsignals.

5. System (1) gemäß einem der vorstehenden Ansprüche, **dadurch gekennzeichnet, dass** die Abtastrate einstellbar ist in Abhängigkeit der Bandbreite des analogen Zwischenfrequenzsignals.

6. System (1) gemäß einem der Ansprüche 2 bis 5, **dadurch gekennzeichnet, dass** die Verarbeitungseinrichtung (4, 22, 24) wenigstens einen Signalpfad aufweist, der mit der Mischeinrichtung (6) verbunden ist, um das digitale Basisbandsignal in Abhängigkeit der entsprechenden Abtastrate jeweils über einen der Signalpfade zu leiten.

7. System (1) gemäß Anspruch 6, **dadurch gekennzeichnet, dass** jeder Signalpfad wenigstens einen digitalen Filter (7, 10, 13, 15, 16) zum Filtern des digitalen Basisbandsignals aufweist.

8. System (1) gemäß Anspruch 7, **dadurch gekennzeichnet, dass** ein Filtermodus des wenigstens einen digitalen Filters (7, 10, 13, 15, 16) einstellbar ist gemäß der Bandbreite des analogen Zwischenfrequenzsignals.

9. System (1) gemäß einem der Ansprüche 6 bis 8, **dadurch gekennzeichnet, dass** jeder Signalpfad wenigstens eine digitale Downsampleeinheit (9, 12, 14, 18) zum Downsampeln des digitalen Basisbandsignals aufweist.

10. System (1) gemäß Anspruch 9, **dadurch gekennzeichnet, dass** die Downsamplerate der wenigstens einen digitalen Downsampleeinheit (9, 12, 14, 18) einstellbar ist gemäß der Abtastrate des analogen Zwischenfrequenzsignals.

11. System (1) gemäß einem der vorstehenden Ansprüche, **dadurch gekennzeichnet, dass** die Mischeinrichtung (6) ein komplexes digitales Basisbandsignal erzeugt.

12. System (1) gemäß einem der vorstehenden Ansprüche, **gekennzeichnet durch** wenigstens einen analogen Eingang (3), der mit der Abtasteinrichtung (5) verbunden ist, die ein empfangenes Radiosignal jeweils in das analoge Zwischenfrequenzsignal mit variabler Zwischenfrequenz umwandeln kann.

13. System (1) gemäß einem der vorstehenden Ansprüche, **dadurch gekennzeichnet, dass** die Mischeinrichtung (6) eine automatische Frequenz-Steuereinrichtung ist.

14. System (1) gemäß einem der Ansprüche 2 bis 13, **dadurch gekennzeichnet, dass** die Verarbeitungseinrichtung (4, 22, 24) eine Demodulationseinrichtung (20, 22) zum Wiederauffinden von Information aus dem digitalen Basisbandsignal aufweist.

15. System (1) nach Anspruch 14, **dadurch gekennzeichnet, dass** die Mischeinrichtung (6), die digitale Downsampleeinrichtung (8, 11), die Demodulationsemrichtung (20) sowie die digitalen Filtereinrichtungen (7, 9, 12) als Teile eines ASIC (4) realisiert sind.

16. Verfahren zum Verarbeiten eines empfangenen Radiosignals, nachdem das Radiosignal in ein analoges Zwischenfrequenzsignal mit variabler Zwischenfrequenz umgewandelt wurde, mit den folgenden Schritten:
- Abtasten des analogen Zwischenfrequenzsignals basierend auf einer variablen Abtastrate, um ein digitales Zwischenfrequenzsignal zu erhalten,
- Verschieben der Frequenz des digitalen Zwischenfrequenzsignals basierend auf einer variablen Verschieberate, die unabhängig von der variablen Abtastrate ist, um ein digitales Basisbandsignal zu erhalten, wobei die Verschieberate in Abhängigkeit einer Frequenz des digitalen Basisbandsignals so eingestellt wird, dass das digitale Zwischenfrequenzsignal in einen bestimmten Frequenzbereich verschoben wird.

17. Verfahren nach Anspruch 16, **gekennzeichnet durch** Verarbeiten des digitalen Basisbandsignals, um ein Ausgangssignal zu erhalten.

18. Verfahren nach Anspruch 16 oder 17, **gekennzeichnet durch** Einstellung der Verschieberate in Abhängigkeit einer Frequenz des digitalen Basisbandsignals.

19. Verfahren nach Anspruch 17 oder 18, **gekennzeichnet durch** Einstellung der Abtastrate gemäß sich ändernden Anforderungen zum Verarbeiten des digitalen Basisbandsignals.

20. Verfahren nach einem der Ansprüche 16 bis 19, **gekennzeichnet durch** Einstellung der Abtastraste in Abhängigkeit der Bandbreite des analogen Zwischenfrequenzsignals.

21. Verfahren nach einem der Ansprüche 17 bis 20, **gekennzeichnet durch** digitales Filtern des digitalen Basisbandsignals während des Schritts des Verarbeitens des digitalen Basisbandsignals, wobei das digitale Filtern wenigstens einmal ausgeführt wird.

22. Verfahren nach Anspruch 21, **gekennzeichnet durch** das Einstellen eines Filtermodus entsprechend der Bandbreite des analogen Zwischenfrequenzsignals während des Schritts des digitalen Filterns des digitalen Basisbandsignals.

23. Verfahren nach einem der Ansprüche 17 bis 22, **gekennzeichnet durch** das digitale Downsampeln des digitalen Basisbandsignals während des Schritts des Verarbeitens des digitalen Basisbandsignals, wobei das digitale Downsampeln wenigstens einmal ausgeführt wird.

24. Verfahren nach Anspruch 23, **gekennzeichnet durch** das Einstellen einer Downsamplerate entsprechend der Abtastrate des analogen Zwischenfrequenzsignals.

25. Verfahren nach einem der Ansprüche 16 bis 24, **gekennzeichnet durch** das Erzeugen eines komplexen digitalen Basisbandsignals während des Schritts des Verschiebens der Frequenz des digitalen Zwischenfrequenzsignals.

## Revendications

1. Système (1) pour traiter un signal analogique à fréquence intermédiaire et dont la fréquence est variable, comprenant :
- des moyens d'échantillonnage (5) pour échantillonner le signal analogique à fréquence intermédiaire sur la base d'une cadence d'échantillonnage variable pour obtenir un signal numérique à fréquence intermédiaire,
- des moyens mélangeurs (6) connectés aux moyens d'échantillonnage pour réaliser le décalage de fréquence du signal numérique à fréquence intermédiaire sur la base d'une cadence de transfert à décalage variable, qui est indépendante de la cadence d'échantillonnage variable servant à obtenir un signal numérique dans la bande de base, la cadence de décalage étant réglable de telle sorte que le signal numérique à fréquence intermédiaire est amené par décalage dans une gamme prédéterminée de fréquences.

2. Système (1) selon la revendication 1, **caractérisé par** des moyens de traitement (4,22,24) pour traiter le signal numérique dans la bande de base pour l'obtention d'un signal de sortie.

3. Système (1) selon la revendication 2, **caractérisé en ce que** les moyens de traitement (4,22,24) sont à même de régler la cadence de décalage en fonction d'une fréquence du signal numérique dans la bande de base.

4. Système (1) selon la revendication 2 ou 3, **caractérisé en ce que** les moyens de traitement (4,22,24) sont capables d'ajuster la cadence d'échantillonnage en fonction des exigences changeantes pour le traitement du signal numérique dans la bande de base.

5. Système (1) selon l'une quelconque des revendications précédentes, **caractérisé en ce que** la cadence d'échantillonnage est réglable en fonction de la largeur de bande du signal analogique à fréquence intermédiaire.

6. Système (1) selon l'une quelconque des revendications 2 à 5, **caractérisé en ce que** les moyens de traitement (4,22,24) comprennent au moins un trajet de signal qui est connecté aux moyens mélangeurs (6) pour l'acheminement du signal numérique dans la bande de base en fonction de la cadence d'échantillonnage correspondante respectivement par l'intermédiaire de l'un des trajets du signal.

7. Système (1) selon la revendication 6, **caractérisé en ce que** chaque trajet du signal comprend au moins un filtre numérique (7,10,13,15,16) pour filtrer le signal numérique dans la bande de base.

8. Système (1) selon la revendication 7, **caractérisé en ce qu'**un mode d'au moins un filtre numérique (7,10,13,15,16) est réglable en fonction de la largeur de bande du signal analogique à fréquence intermédiaire.

9. Système (1) selon l'une quelconque des revendications 6 à 8, **caractérisé en ce que** chaque trajet du signal comprend au moins des moyens numériques de sous-échantillonnage (9,12,14,18) pour sous-échantillonner le signal numérique dans la bande de base.

10. Système (1) selon la revendication 9, **caractérisé en ce qu'**une cadence de sous-échantillonnage d'au moins l'un des moyens de sous-échantillonnage numériques (9,12,14,18) est réglable en fonction de la cadence d'échantillonnage du signal analogique à fréquence intermédiaire.

11. Système (1) selon l'une quelconque des revendications précédentes, **caractérisé en ce que** les moyens mélangeurs (6) génèrent un signal numérique complexe dans la bande de base.

12. Système (1) selon l'une quelconque des revendications précédentes, **caractérisé par** au moins une extrémité frontale analogique (3), qui est connectée aux moyens d'échantillonnage (5) et est à même de convertir un signal de diffusion reçu dans le signal analogique à fréquence intermédiaire respectivement avec une fréquence intermédiaire.

13. Système (1) selon l'une quelconque des revendications précédentes, **caractérisé en ce que** les moyens mélangeurs (6) sont des moyens de commande automatique de fréquence.

14. Système (1) selon l'une quelconque des revendications 2 à 13, **caractérisé en ce que** les moyens de traitement (4,22,24) comprennent des moyens de démodulation (20,22) pour récupérer une information à partir du signal numérique dans la bande de base.

15. Système (1) selon la revendication 14, **caractérisé en ce que** les moyens de mélange (6), les moyens numériques de sous-échantillonnage (8,11), les moyens de démodulation (20) et les moyens formant filtres numériques (7,9,12) sont réalisés sous la forme de parties d'un seul circuit ASIC (4).

16. Procédé pour traiter un signal de diffusion reçu après la conversion du signal de diffusion en un signal analogique à fréquences intermédiaires, qui présente une fréquence intermédiaire variable, comprenant les étapes consistant à :
- échantillonner le signal analogique à fréquence intermédiaire sur la base d'une cadence d'échantillonnage variable pour obtenir un signal numérique à fréquence intermédiaire,
- décaler la fréquence de signal numérique à fréquence intermédiaire sur la base d'une cadence de décalage variable indépendante de la cadence d'échantillonnage variable pour l'obtention d'un signal numérique dans la bande de base, la cadence de décalage étant réglée en fonction d'une fréquence du signal numérique dans la bande de base de sorte que le signal numérique à fréquence intermédiaire est amené par décalage dans une gamme prédéterminée de fréquences.

17. Procédé selon la revendication 16, **caractérisé par** le traitement du signal numérique dans la bande de base pour l'obtention d'un signal de sortie.

18. Procédé selon la revendication 16 ou 17, **caractérisé par** le réglage de la cadence de décalage en fonction d'une fréquence du signal numérique dans la bande de base.

19. Procédé selon la revendication 17 ou 18, **caractérisé par** le réglage de la cadence d'échantillonnage en fonction d'exigences changeantes pour le traitement du signal numérique dans la bande de base.

20. Procédé selon l'une quelconque des revendications 7 à 19, **caractérisé par** le réglage de la cadence d'échantillonnage en fonction de la largeur de bande du signal analogique à fréquence intermédiaire.

21. Procédé selon l'une quelconque des revendications 17 à 20, **caractérisé par** un filtrage numérique du signal numérique dans la bande de base au moins une fois pendant l'étape de traitement du signal numérique dans la bande de base.

22. Procédé selon la revendication 21, **caractérisé par** le réglage d'un mode de filtre conformément à la largeur de bande du signal analogique à fréquence intermédiaire pendant l'étape de filtrage numérique du signal numérique dans la bande de base.

23. Procédé selon l'une quelconque des revendications 17 à 22, **caractérisé par** un sous-échantillonnage numérique du signal numérique dans la bande de base au moins une fois pendant l'étape de traitement du signal numérique dans la bande de base.

24. Procédé selon la revendication 23, **caractérisé en ce que** l'ajustement d'une cadence de sous-échantillonnage en fonction de la cadence d'échantillonnage du signal analogique à fréquence intermédiaire.

25. Procédé selon l'une quelconque des revendications 16 à 24, **caractérisé en ce que** la production d'un signal complexe numérique dans la bande de base lors de l'étape de décalage de la fréquence du signal numérique à fréquence intermédiaire.
